(19) Europäisches Patentamt
European Patent Office
Office européen des brevets

(11) EP 2 682 597 B1

(12) **EUROPEAN PATENT SPECIFICATION**

(45) Date of publication and mention
of the grant of the patent:
**27.09.2017 Bulletin 2017/39**

(21) Application number: **12752960.0**

(22) Date of filing: **16.02.2012**

(51) Int Cl.:
***F03D 1/06*** *(2006.01)*

(86) International application number:
**PCT/JP2012/053713**

(87) International publication number:
**WO 2012/117866 (07.09.2012 Gazette 2012/36)**

(54) **METHOD FOR DESIGNING A WIND TURBINE BLADE COMPRISING A WINGLET**

VERFAHREN ZUR GESTALTUNG EINES WINDTURBINENBLATTS MIT WINGLET

PROCÉDÉ DE CONCEPTION D'UNE PALE DE TURBINE ÉOLIENNE AVEC WINGLET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2011 JP 2011043188**

(43) Date of publication of application:
**08.01.2014 Bulletin 2014/02**

(73) Proprietor: **Mitsubishi Heavy Industries, Ltd.
Tokyo 108-8215 (JP)**

(72) Inventor: **FUKAMI, Koji
Tokyo 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A1- 1 500 814          CN-A- 101 749 193
JP-A- 56 167 599          JP-A- 2008 540 240
JP-A- 2008 544 133        JP-A- 2009 500 227
JP-A- 2009 507 719        JP-A- 2010 270 623
US-A1- 2002 162 917       US-A1- 2008 093 860
US-A1- 2009 257 885       US-B2- 7 997 875**

**Description**

Technical Field

The present invention relates to a wind turbine blade, a wind turbine generator with the same, and a design method of a wind turbine blade.

{Background Art}

Recently, a wind turbine generator has attracted people's attention as clean energy that does not emit greenhouse effect gas when generating power. A wind turbine generator rotates wind turbine blades around its axis by wind and converts this rotation force into electric power so as to attain power output.
Power output of a wind turbine generator is expressed by a product of shaft end output (output generated by blades) and conversion efficiency (efficiencies of bearings and a generator, and the like). The shaft end output is expressed by the following formula, and a blade having high blade efficiency and a greater radius enhances electric power generation.

$$\text{Shaft end output} = 1/2 \times \text{Air density} \times \text{Wind speed}^3 \times$$

$$\text{Blade efficiency} \times \pi \times (\text{Blade radius}/2)^2$$

Blade efficiency has a logical upper limit (Betz limit = 0.593). Actually, the upper limit of blade efficiency is approximately 0.5 because of (1) efficiency loss due to swirl (rotation) of a blade wake, (2) efficiency loss due to air resistance on a blade section, and (3) efficiency loss due to a wing tip vortex. In the above (1), the loss can be reduced by setting the rotational torque to be smaller according to the law of conservation of angular momentum (i.e. by accelerating the rotational frequency). On the other hand, in the above (2), as the rotational frequency becomes higher, the loss due to air resistance tends to become greater. Therefore, there is a conflict relationship between the above (1) and the above (2), and it is difficult to cope with both.
However, the above (3) can be improved by modifying the blade tip shape, so as to enhance the efficiency.
The following Patent Literature 1 discloses an improved blade tip shape. Specifically, a wind tip is so bent toward a pressure side of the blade in the angle range from 70° to 90° (CANT angle) as to form a winglet.

Citation List

Patent Literature

{PTL 1} US Patent No. 7540716 (Column 5, lines 25-37, and Fig. 6).

{Further PTL}

US 2009/0257885 A1 discloses a wind turbine blade comprising a winglet.

Summary of Invention

Technical Problem

Unfortunately, Patent Literature 1 specifies the CANT angle in the light of noise reduction, but not in the light of reduction of efficiency loss due to wing tip vortex as explained in the above (3), that is, not in the light of improvement of the performance.
In addition, when designing a wind turbine blade, a moment caused on a blade root of a wind turbine blade should be taken into account in the light of not only the performance of a wind turbine blade but also the reliability on a whole wind turbine. In Patent Literature 1, however, the moment caused on the blade root of the wind turbine blade is not reviewed.
The present invention has been made in the light of the above facts, and has an object to provide a design method of a wind turbine blade capable of realizing enhancement of performance by a winglet formed at a wing tip. The present invention also has an object to provide a design method of a wind turbine blade capable of reducing moment (load) caused on a blade root of a wind turbine blade.

Solution to Problem

In order to solve the above problems, the design method of the wind turbine blade of the present invention employs the following solutions.

A not claimed wind turbine blade according to a first aspect of the present invention includes a winglet formed by bending a tip side thereof toward a suction side of the blade or a pressure side of the blade relative to an adjacent portion adjacent on a blade root side, and the wind turbine blade has a CANT angle of 15° or more and 55° or less, in which the CANT angle is defined by a blade axial line of the winglet relative to a radial extrapolation line of a blade axial line of the adjacent portion.

The CANT angle of the winglet is configured to be 15° or more and 55° or less so that swirls on the blade tip are reduced, thereby enhancing the performance (torque generated by the wind turbine blade) and/or reducing the moment on the blade root.

According to the simulations made by the inventors of the present invention, the performance is enhanced by about 0.3% at most, and the blade root moment is reduced by 0.45% at most.

Each of the blade axial lines is defined, for example, as a line formed by connecting in the blade axial direction each maximum blade thickness position on a center line of each of blade sections (a line from a leading edge to a trailing edge through a point located at an equivalent distance to the suction side surface of the blade and to the pressure side surface of the blade) in the radial position. A chord of blade may be used instead of the center line.

The CANT angle is preferably set to be 25° or more and 35° or less.

The wind turbine blade according to the first aspect of the present invention includes a tip end located on a tip side thereof, having a substantially linear blade axial line; and a bent portion located on a base end side thereof and bent relative to the adjacent portion, and the bent portion is bent gradually so as to satisfy the CANT angle.

The bent portion is configured to be bent gradually so as to satisfy the CANT angle. Specifically, the winglet is formed to be bent not sharply but smoothly and continuously relative to the adjacent portion. Accordingly, it is possible to prevent great bending stress from being caused onto the bent portion.

In the wind turbine blade according to the first aspect of the present invention, a CANT position that is a start position where the winglet is started to be bent relative to the adjacent portion is set to be 97.0%R or more and 98.5%R or less, where a blade radius is set to be R when the CANT angle of the winglet is 0.

The CANT position is configured to be 97.0%R or more and 98.5%R or less, thereby enhancing the performance of the wind turbine blade and/or reducing the blade root moment.

In the wind turbine blade according to the first aspect of the present invention, the winglet is bent toward a pressure side of the blade when the wind turbine blade is located on an up-wind side of a wind turbine tower.

In the case of an up-wind wind turbine in which the wind turbine blade is located on the up-wind side of the wind turbine tower, the winglet is configured to be bent toward the pressure side of the blade. Therefore, the tip of the winglet is disposed apart from the wind turbine tower, so that the winglet can be prevented from coming into contact with the wind turbine tower, thereby enhancing the safety. Further, it is also possible to reduce noise caused by aerodynamic interference against the wind turbine tower, and variable load caused on the wind turbine blade and the wind turbine tower, thereby realizing noise reduction and load reduction.

In the wind turbine blade according to the first aspect of the present invention, the winglet is bent toward a suction side of the blade when the wind turbine blade is located on a down-wind side of a wind turbine tower.

In the case of the down-wind wind turbine in which the wind turbine blade is located on the down-wind side of the wind turbine tower, the winglet is configured to be bent toward the suction side of the blade. Accordingly, the tip of the winglet is disposed apart from the wind turbine tower, so that the winglet can be prevented from coming into contact with the wind turbine tower, thereby enhancing the safety. Further, since the wind turbine blade is configured to be used in a down-wind wind turbine, the weather vane effect (tracking performance to the wind direction) can be enhanced so as to reduce load caused on the wind turbine blade and the wind turbine tower.

A not claimed wind turbine generator according to a second aspect of the present invention includes any one of the above described turbine blades, a rotor connected to a blade root side of the wind turbine blade and being rotated by the wind turbine blade, and a generator for converting rotation force obtained by the rotor into electric output.

The wind turbine generator is provided with the above described wind turbine blade, so that it is possible to enhance the performance and/or reduce the blade root moment of the wind turbine blade, thereby realizing enhancement of the power output and/or enhancement of the reliability.

A design method of a wind turbine blade according to a third aspect of the present invention is defined in claim 1. The design method configures the winglet to have a greater blade radius than a CANT position that is a start position where the winglet is started to be bent relative to the adjacent portion, and determines a CANT angle so as to enhance torque generated by the wind turbine blade and decrease moment caused on the blade root of the wind turbine blade, compared to a reference blade having the CANT angle of 0, in which the CANT angle is defined by a blade axial line of the winglet relative to a radial extrapolation line of a blade axial line of the adjacent portion.

If the performance is evaluated for the reference blade having the blade radius equal to the CANT position, it is obvious that the performance is enhanced since a winglet is added to the reference blade so that the blade radius becomes increased. In such a method, the effect achieved by the winglet cannot be accurately evaluated. Therefore, the present embodiment specifies the CANT angle at which the torque (i.e. performance) becomes increased and the blade root moment becomes decreased not relative to the reference blade having the blade radius equal to the CANT position, but relative to the reference blade having the greater blade radius than the CANT position. Accordingly, it is possible to accurately evaluate the effect by the winglet, and determine the appropriate CANT angle.

As the blade radius of the reference blade that is a greater blade radius than the CANT position, a blade radius R when the CANT angle of the winglet is 0 and/or a blade radius that is a median between the blade radius R and the CANT position may be used.

Advantageous Effects of Invention

According to the present invention, the CANT angle of the winglet is configured to be 15° or more and 55° or less, so that swirls on the blade tip are reduced, thereby enhancing the performance (torque generated by the wind turbine blade) and/or reducing the moment (load) caused on the blade root.

Brief Description of Drawings

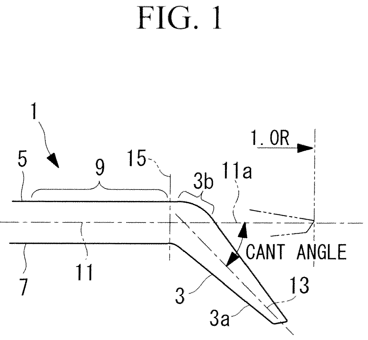

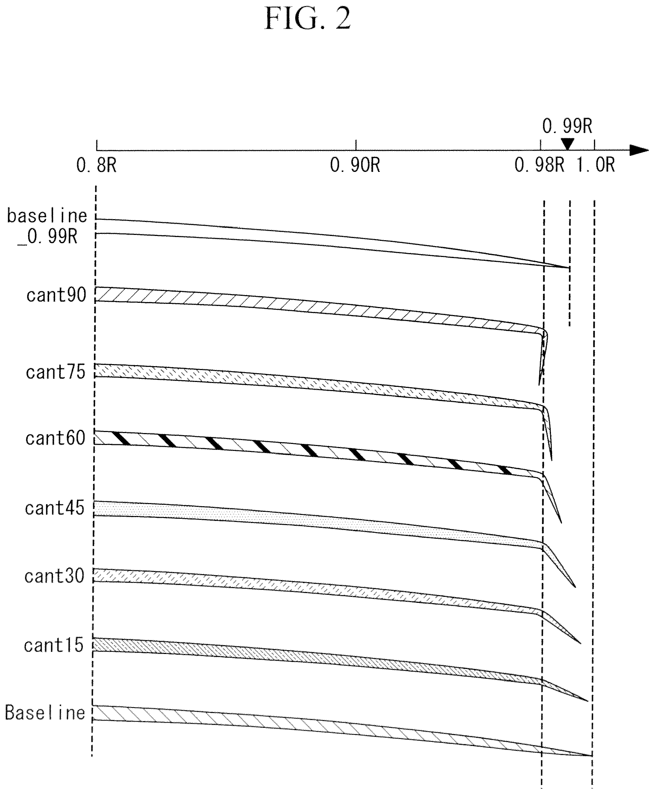

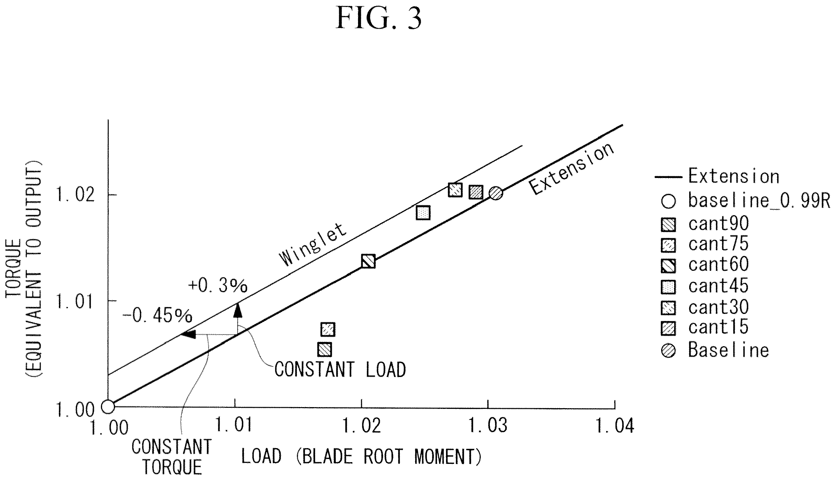

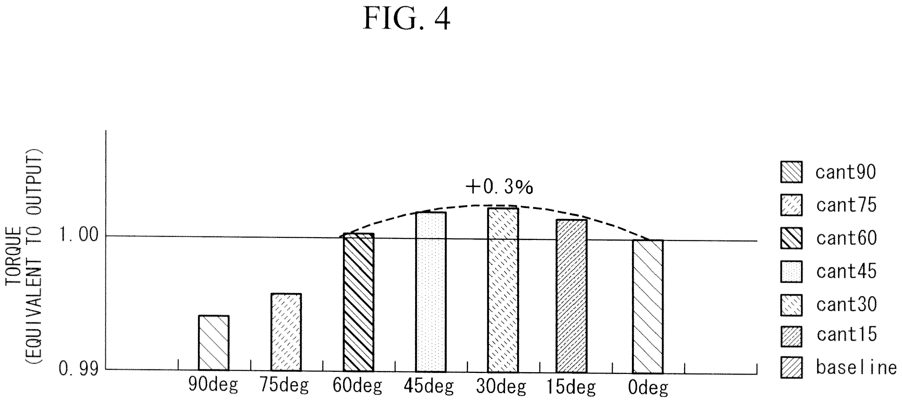

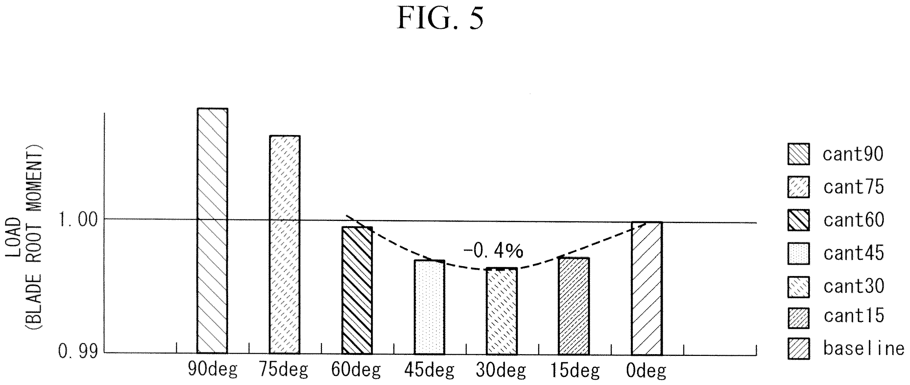

{Fig. 1} Fig. 1 illustrates a winglet of a wind turbine blade according to one embodiment of the present invention, and is a front view seen from a blade leading edge.
{Fig. 2} Fig. 2 illustrates various tips of the wind turbine blade that were used in the studies in the present embodiment.
{Fig. 3} Fig. 3 shows a graph of the results of simulation made on each of the wind turbine blades illustrated in Fig. 2.
{Fig. 4} Fig. 4 shows a graph of the results of Fig. 3 by focusing on the torques (performance).
{Fig. 5} Fig. 5 shows a graph of the results of Fig. 3 by focusing on the load (blade root moment).

Description of Embodiment

Hereinafter, descriptions will be provided on the embodiment according to the present invention with reference to the drawings.

The wind turbine blades according to the present embodiment are preferably used as blades of a wind turbine generator. The wind turbine blades are configured to be three dimensional blades and include three blades, for example, which are respectively coupled to a rotor at 120° intervals. Each wind turbine blade preferably has a rotational radius (blade radius) of 60 m or more, and is a slender blade whose solidity is 0.2 or more and 0.6 or less. The wind turbine blade may have a variable pitch or a fixed pitch.

Fig. 1 illustrates a tip of the wind turbine blade 1 provided with a winglet 3. This drawing is a front view of the wind turbine blade viewed from the leading edge thereof, and a suction side of the blade (suction surface) 5 is located on the upper side and a pressure side of the blade (static pressure surface) 7 is located on the lower side in this drawing.

As illustrated in the same drawing, the winglet 3 is formed to be bent toward the pressure side of the blade relative to an adjacent portion 9 adjacent on the blade root side. The present embodiment assumes an up-wind wind turbine having the wind turbine blade 1 located on the up-wind side of the wind turbine tower so that the winglet 3 is bent toward the pressure side of the blade, but may be bent toward the suction side of the blade. In the case of a down-wind wind turbine, the winglet 3 is preferably bent toward the suction side of the blade.

The CANT angle is an angle defined by a blade axial line 13 of the winglet 3 relative to a radial extrapolation line 11a of a blade axial line 11 of the adjacent portion 9. Each of the blade axial lines 11, 13 is defined, for example, as a line formed by connecting in the blade axial direction each maximum blade thickness position on a center line of each of the blade sections (a line from a leading edge to a trailing edge through a point located at an equivalent distance to the suction side surface of the blade and to the pressure side surface of the blade) in the radial position. A chord of blade may be used instead of the center line.

In the present embodiment, the CANT angle is set to be 15° or more and 55° or less, preferably 25° or more and 35° or less, as described later.

The winglet 3 includes a tip end 3a located on its tip side thereof and having a substantially linear blade axial line 13, and a bent portion 3b located on its base end side and bent relative to the adjacent portion. The bent portion 3b is configured to have a gradually bent shape so as to satisfy the desired CANT angle. Specifically, the bent portion 3b has a continuous curved face having a radius of curvature of a predetermined value or more so as to be smoothly connected to the tip end 3a having the linear blade axial line 13.

The CANT position 15 that is a start position where the winglet 3 is started to be bent relative to the adjacent portion 9 is set to be 1.5%R or more and 3.0%R or less, where the blade radius is set to be 1.0 R when the CANT angle of the winglet 3 is 0.

Fig. 2 illustrates various tips of the wind turbine blade that were used in the studies on the wind turbine blade of the present embodiment. Specifically, various tips of the wind turbine blade are illustrated in the range of 0.8 R to 1.0 R, where the wind turbine blade with no winglet (i.e. the CANT angle is 0) is set to be 1.0 R.

In the same figure, the following tips of the wind turbine blade are illustrated in order from the top to the bottom of the drawing.

baseline_0.99R; a tip of the wind turbine blade as the reference blade for comparison, having a blade radius of 0.99R with no winglet.

cant90; a tip of the wind turbine blade bent at the CANT position of 0.98R, having the CANT angle of 90°.

cant75; a tip of the wind turbine blade bent at the CANT position of 0.98R, having the CANT angle of 75°.

cant60; a tip of the wind turbine blade bent at the CANT position of 0.98R, having the CANT angle of 60°.

cant45; a tip of the wind turbine blade bent at the CANT position of 0.98R, having the CANT angle of 45°.

cant30; a tip of the wind turbine blade bent at the CANT position of 0.98R, having the CANT angle of 30°.

cant15; a tip of the wind turbine blade bent at the CANT position of 0.98R, having the CANT angle of 15°.

baseline; a tip of the wind turbine blade as the reference blade for comparison, having a blade radius of 1.0 R with no winglet.

As described above, the baseline_0.99R and the baseline that are the reference blades have greater radius than 0.98R that is the CANT position. The baseline_0.99R that is one of the reference blades has a blade radius that is a median between the 0.98R of the CANT position and 1.0R of the baseline.

With respect to each of the wind turbine blades illustrated in Fig. 2, the torque (equivalent to output) and the load (moment caused on the blade root; blade root moment) that are generated by each wind turbine blade are calculated by simulations, and calculated results are shown in Fig. 3.

In the simulations used in the studies of the present embodiment, the design tip speed ratio is set to be 8.0 or more and 8.5 or less, and the Reynolds number is set to be 3,000,000 or more and 10,000,000 or less. Note that the design tip speed ratio is found by "blade tip speed/ infinite up-wind speed". The Reynolds number in the wind turbine is obtained by taking account of a relative wind speed with respect to a predetermined cross section of a blade rotating at a predetermined rotational frequency, and is expressed by the following formula.

```
Reynolds number =

    Air density × Relative wind speed with respect to

blade section × Code length of blade section / Viscosity coefficient of air
```

In Fig. 3, the vertical axis denotes the torque (equivalent to output), and a greater value indicates that the wind turbine blade has a higher performance. The horizontal axis denotes the load, and a smaller value indicates a smaller blade root moment which means that the wind turbine has a longer durability life.

In the same figure, the value of the baseline_0.99R was used as the origin (1.0, 1.0) at the lower left. A straight line (Extension) passing through this origin and the value of the baseline was drawn. If a value falls above the straight line (Extension), it means that the torque is greater and the load is smaller, and if a value falls below the line, it means that the torque is smaller and the load is greater. In other words, the region above the straight line (Extension) exhibits the effect achieved by the winglet. As apparent in the same figure, the CANT angles 75° and 90° fall in the region below the straight line (Extension), and this indicates that the effect by the winglet cannot be attained. The CANT angle 60° falls on the straight line (Extension), and this indicates that the effect by the winglet scarcely exhibits.

To the contrary, the CANT angles 45°, 30° and 15° fall in the region above the straight line (Extension), and this indicates that the torque is enhanced and the load is reduced, which means the effect by the winglet can be attained. As described above, an appropriate setting of the CANT angle of the winglet allows the value to fall on the straight line (Winglet). Considering on the straight line (Winglet), if the CANT angle is so set as to increase the torque (performance) using the constant load, the performance is increased by 0.3%, and if the CANT angle is so set as to decrease the load using the constant performance, the load is decreased by 0.45%

Fig. 4 shows a graph of the results of Fig. 3 by focusing on the torques (performance) generated by the various wind turbine blades. As apparent in the same graph, the torque becomes greater at the CANT angle of 15° or more, and the torque also becomes increased at 55° or less which is less than 60°. To the contrary, the torque is rather decreased at the CANT angle of 70° to 90° which is disclosed in Patent Literature 1.

Fig. 5 shows a graph of the results of Fig. 3 by focusing on the loads (blade root moment). As apparent in the same graph, the load becomes smaller at the CANT angle of 15° or more, and the load also is decreased at 55° or less which is less than 60°. To the contrary, the load is rather increased at the CANT angle of 70° to 90° which is disclosed in Patent Literature 1.

As illustrated in Fig. 3, the design method of the wind turbine blade to determine the CANT angle of the winglet in accordance with the graph expressed by one axis having the torque (performance) and the other axis having the load (blade root moment) provides the following advantages.

If the performance is evaluated for the reference blade having the blade radius equal to the CANT position (i.e. wind turbine blade having the blade radius of 0.98R), it is obvious that the performance is enhanced since a winglet is added to the reference blade of 0.98R so that the blade radius becomes increased. In such a method, the effect achieved by the winglet cannot be accurately evaluated.

Therefore, the present embodiment does not employ the reference blade having a blade radius of 0.98R which is equal to the CANT position, but employs the reference blade "baseline_0.99R" having the blade radius of 0.99R and the reference blade "baseline" having the blade radius of 1.0R, both of which are a greater blade radius than the CANT position, so as to specify the range that exhibits effect with respect to the torque and the load, and set the CANT angle at which the torque (performance) becomes increased and the blade root moment becomes decreased. Accordingly, it is possible to accurately evaluate the effect by the winglet, and determine the appropriate CANT angle.

Although the present embodiment employs two reference blades (baseline_0.99R and baseline) for the evaluation, if the straight line (Extension) illustrated in Fig. 3 can be specified by using other design standards, only one reference blade having a greater blade radius than the CANT position may, in a not claimed embodiment, be used for the evaluation.

As described above, according to the present embodiment, the following operation and effect can be attained.

The CANT angle of the winglet 3 is configured to be 15° or more and 55° or less (preferably 25° or more and 35° or less), so that swirls on the blade tip are reduced, thereby enhancing the performance (torque generated by the wind turbine blade) and/or reducing the load (blade root moment).

According to the simulations made by the inventors of the present invention, the performance is enhanced by 0.3% at most, and the blade root moment is reduced by 0.45% at most.

The bent portion 3b is configured to be so bent gradually as to satisfy the desired CANT angle. Specifically, the winglet 3 is formed to be bent not sharply but smoothly and continuously relative to the adjacent portion 9. Accordingly, it is possible to prevent great bending stress from being caused onto the bent portion 3b.

In the case of an up-wind wind turbine in which the wind turbine blade 1 is located on the up-wind side of the wind turbine tower, the winglet 3 is configured to be bent toward the pressure side of the blade, so that the tip of the winglet 3 is disposed apart from the wind turbine tower, therefore, the winglet 3 can be prevented from coming into contact with the wind turbine tower, thereby enhancing the safety. Further, it is also possible to reduce noise caused by aerodynamic interference against the wind turbine tower, and variable load caused on the wind turbine blade and the wind turbine tower, thereby realizing noise reduction and load reduction. Of course, if there is no possibility of interference against the wind turbine tower or the like, the winglet 3 may be bent toward the suction side of the blade.

In the case of a down-wind wind turbine in which the wind turbine blade is located on the down-wind side of the wind turbine tower, the winglet is preferably configured to be bent toward the suction side of the blade. Accordingly, the tip of the winglet is disposed apart from the wind turbine tower, so that the winglet can be prevented from coming into contact with the wind turbine tower, thereby enhancing the safety. Further, since the wind turbine blade is configured to be used in a down-wind wind turbine, the weather vane effect (tracking performance to the wind direction) can be enhanced so as to reduce load caused on the wind turbine blade and the wind turbine tower. Of course if there is no possibility of interference against the wind turbine tower or the like, the winglet may be bent toward the pressure side of the blade.

The wind turbine generator according to the present embodiment is provided with the wind turbine blade 1 of the present embodiment, so that it is possible to enhance the performance and/or reduce the blade root moment of the wind turbine blade, thereby realizing enhancement of the power output and/or enhancement of the reliability.

In the present embodiment, the studies have been made on the simulation results based on the CANT position of 0.98R (98%R), however, the CANT position of 97.0%R or more and 98.5%R or less can also achieve the same advantageous effects.

Reference Signs List

1 Wind turbine blade

3 Winglet
3a Tip end
3b Bent portion
5 Suction side of blade
7 Pressure side of blade
9 Adjacent portion
11 Blade axial line of adjacent portion
11a Radial extrapolation line of blade axial line of adjacent portion
13 Blade axial line of winglet

**Claims**

1. A design method of a wind turbine blade (1) provided with a winglet (3) whose tip side is bent toward a suction side (5) of the blade or a pressure side (7) of the blade relative to an adjacent portion (9) adjacent on a blade root side, the design method comprising:

   providing two reference blades (baseline_0.99R and baseline) having different lengths and having a reference CANT angle of 0;
   simulating torques and blade root moments that are generated by the wind turbine blade and the two reference blades; and
   determining a CANT angle of the wind turbine blade (1) that enhances the torque generated by the wind turbine blade (1) and decreases the blade root moment caused on the blade root of the wind turbine blade (1), on the basis of a result of the simulating, relative to torque generated by the two reference blades and the blade root moment caused on the blade root of the two reference blades, by
   setting a tip speed ratio to be 8.0 or more and 8.5 or less, and the Reynolds number to be 3,000,000 or more and 10,000,000 or less,
   calculating torques and blade root moments of the two reference blades having different lengths (baseline_0.99R and baseline), by simulation (3),
   wherein each of the two reference blades has a blade radius from the blade root to a blade tip thereof, and the blade radius of both reference blades is greater than a length from the blade root to a CANT position of the wind turbine blade (1),
   wherein the CANT position of the wind turbine blade (1) is a start position where the winglet (3) is started to be bent relative to the adjacent portion (9),
   wherein a first reference blade (baseline) of the two reference blades has a blade span length of 1.0R and no winglet, and the other reference blade (baseline_0.99R) of the two reference blades has a blade span length of 0.99R and no winglet, wherein R is the blade span length of the first reference blade (baseline),
   setting a plurality of blades having different CANT angles and calculating torques and blade root moments of the blades by simulations,
   plotting the value of the calculated result of the reference blade (baseline 0.99R) as an origin (1.0, 1.0) at the lower left of a graph illustrating a relationship between the torque and the load, plotting the value of the calculated result of the reference blade (baseline), and obtaining a straight line (Extension) passing through the origin and the value of the calculated result of the reference blade (baseline), wherein the graph has a vertical axis denoting the torque and a horizontal axis denoting the blade root moment,
   plotting values of the calculated results of the plurality of blades having different CANT angles on the graph, determining a range of the CANT angles in which the torque is greater and the blade root moment is smaller, from the values of the calculated results of the plurality of blades falling above the straight line (Extension), by comparing the straight line (Extension) with the values of the calculated results of the plurality of blades,
   wherein the CANT angle is defined by a blade axial line (13) of the winglet (3) relative to a radial extrapolation line (11a) of a blade axial line (11) of the adjacent portion (9),
   wherein the CANT angle is comprised between 15° or more and 55° or less,
   wherein each of the two reference blades has a blade radius from the blade root to a blade tip thereof, and the blade radius of each of the two reference blades is greater than a length from the blade root to a CANT position of the wind turbine blade (1),
   wherein the CANT position is set to be 97.0%R or more and 98.5%R or less.

2. The design method according to claim 1, wherein
   the winglet (3) comprises:

a tip end (3a) located on a tip side thereof, having a substantially linear blade axial line (13); and
a bent portion (3b) located on a base end side thereof and bent relative to the adjacent portion (9), and

    the bent portion (3b) is bent gradually so as to satisfy the CANT angle.

3. The design method according to any one of claim 1 to claim 2, wherein

    the winglet (3) is bent toward a pressure side (7) of the blade when the wind turbine blade (1) is configured to be located on an up-wind side of a wind turbine tower.

4. The design method according to any one of claim 1 to claim 2, wherein

    the winglet (3) is bent toward a suction side (5) of the blade when the wind turbine blade is configured to be located on a down-wind side of a wind turbine tower.


**Patentansprüche**

1. Konstruktionsverfahren für einen Windturbinenflügel (1), der mit einem Winglet (3) versehen ist, dessen Spitzenseite in Richtung einer Saugseite (5) des Flügels oder einer Druckseite (7) des Flügels relativ zu einem benachbarten Abschnitt (9) neben einer Flügelwurzelseite gebogen ist, wobei das Konstruktionsverfahren umfasst:

    Bereitstellen zweier Referenzflügel (baseline_0.99R und baseline) mit verschiedenen Längen und mit einem Referenz-Schrägungswinkel von 0,
Simulieren von Drehmomenten und Flügelwurzelmomenten, die durch die Windturbinenflügel und die zwei Referenzflügel generiert werden, und
Bestimmen eines Schrägungswinkels des Windturbinenflügels (1), der das durch den Windturbinenflügel (1) generierte Drehmoment erhöht und das an der Flügelwurzel des Windturbinenflügels (1) hervorgerufene Flügelwurzelmoment verringert, auf der Basis eines Ergebnisses des Simulierens, relativ zu dem durch die zwei Referenzflügel generierten Drehmoment und dem an der Flügelwurzel der zwei Referenzflügel hervorgerufenen Flügelwurzelmoment, durch
Einstellen eines Spitzengeschwindigkeitsverhältnisses auf mindestens 8,0 und maximal 8,5 und der Reynolds-Zahl auf mindestens 3.000.000 und maximal 10.000.000,
Berechnen von Drehmomenten und Flügelwurzelmomenten der zwei Referenzflügel, die verschiedene Längen (baseline_0.99R und baseline) durch Simulation,
wobei jeder der beiden Referenzflügel einen Flügelradius von der Flügelwurzel bis zu seiner Flügelspitze hat, und der Flügelradius beider Referenzflügel größer ist als eine Länge von der Flügelwurzel zu einer Schrägungsposition des Windturbinenflügels (1),
wobei die Schrägungsposition des Windturbinenflügels (1) eine Startposition ist, wo die Biegung des Winglets (3) relativ zu dem benachbarten Abschnitt (9) beginnt,
wobei ein erster Referenzflügel (baseline) der beiden Referenzflügel eine Flügelspannweite von 1.0R und kein Winglet aufweist, und der andere Referenzflügel (baseline_0.99R) der beiden Referenzflügel eine Flügelspannweite von 0.99R und kein Winglet aufweist,
wobei R die Flügelspannweite des ersten Referenzflügels (baseline) ist,
Einstellen mehrerer Flügel, die verschiedene Schrägungswinkel aufweisen, und Berechnen von Drehmomenten und Flügelwurzelmomenten der Flügel durch Simulationen,
Auftragen des Wertes der berechneten Ergebnisse des Referenzflügels (baseline_0.99R) als einen Ursprung (1.0, 1.0) in der unteren linken Ecke eines Kurvendiagramms, das eine Beziehung zwischen dem Drehmoment und der Last veranschaulicht, Auftragen des Wertes der berechneten Ergebnisse des Referenzflügels (baseline), und Erhalten einer geraden Linie (Verlängerung), die durch den Ursprung hindurch verläuft, und des Wertes der berechneten Ergebnisse des Referenzflügels (baseline), wobei das Kurvendiagramm eine vertikale Achse hat, die das Drehmoment bezeichnet, und eine horizontale Achse hat, die das Flügelwurzelmoment bezeichnet,
Auftragen von Werten der berechneten Ergebnisse der mehreren Flügel, die verschiedene Schrägungswinkel haben, auf das Kurvendiagramm,
Bestimmen eines Bereichs der Schrägungswinkel, in denen das Drehmoment größer ist und das Flügelwurzelmoment kleiner ist, anhand der Werte der berechneten Ergebnisse der mehreren Flügel, die oberhalb der geraden Linie (Verlängerung) liegen, durch Vergleichen der geraden Linie (Verlängerung) mit den Werten der berechneten Ergebnisse der mehreren Flügel,

wobei der Schrägungswinkel durch einer Flügelaxiallinie (13) des Winglet (3) relativ zu einer radialen Extrapolationslinie (11a) einer Flügelaxiallinie (11) des benachbarten Abschnitts (9) definiert wird,

wobei der Schrägungswinkel zwischen mindestens 15° und maximal 55° liegt,

wobei jeder der zwei Referenzflügel einen Flügelradius von der Flügelwurzel bis zu seiner Flügelspitze hat, und der Flügelradius eines jeden der beiden Referenzflügel größer ist als eine Länge von der Flügelwurzel bis zu einer Schrägungsposition des Windturbinenflügels (1),

wobei die Schrägungsposition auf mindestens 97,0%R und maximal 98,5%R eingestellt wird.

**2.** Konstruktionsverfahren nach Anspruch 1, wobei
das Winglet (3) umfasst:

ein Spitzenende (3a), das sich auf seiner Spitzenseite befindet und eine im Wesentlichen lineare Flügelaxiallinie (13) aufweist, und

einen gebogenen Abschnitt (3b), der sich auf seiner Basisendseite befindet und relativ zu dem benachbarten Abschnitt (9) gebogen ist, und

der gebogene Abschnitt (3b) sich allmählich so biegt, dass der Schrägungswinkel erhalten wird.

**3.** Konstruktionsverfahren nach einem der Ansprüche 1 und 2, wobei
das Winglet (3) in Richtung einer Druckseite (7) des Flügels gebogen ist, wenn der Windturbinenflügel (1) so konfiguriert ist, dass er sich auf der dem Wind zugewandten Seite eines Windturbinenmasten befindet.

**4.** Konstruktionsverfahren nach einem der Ansprüche 1 und 2, wobei
das Winglet (3) in Richtung einer Saugseite (5) des Flügels gebogen ist, wenn der Windturbinenflügel so konfiguriert ist, dass er sich auf der dem Wind abgewandten Seite eines Windturbinenmasten befindet.


**Revendications**

**1.** Procédé de conception d'une pale d'éolienne (1) pourvue d'une ailette (3) dont un côté de bout est incliné vers un côté de dépression (5) de la pale ou un côté de pression (7) de la pale par rapport à une partie adjacente (9) adjacente à un côté de pied de pale,

le procédé de conception comportant le fait de :

prévoir deux pales de référence (ligne de base 0,99R et ligne de base) ayant différentes longueurs et ayant un angle d'inclinaison de référence de 0 ;

simuler des couples et des moments de pied de pale qui sont générés par la pale d'éolienne et les deux pales de référence ; et

déterminer un angle d'inclinaison de la pale d'éolienne (1) qui améliore le couple généré par la pale d'éolienne (1) et diminue le moment de pied de pale appliqué sur le pied de pale de la pale d'éolienne (1), sur la base d'un résultat de la simulation, par rapport à un couple généré par les deux pales de référence et au moment de pied de pale appliqué sur le pied de pale des deux pales de référence, en

prévoyant un rapport de vitesse de bout pour être de 8,0 ou plus et 8,5 ou moins, et le nombre de Reynolds pour être de 3000000 ou plus et 10000000 ou moins,

calculant des couples et des moments de pied de pale des deux pales de référence ayant différentes longueurs (ligne de base 0,99R et ligne de base), par simulation,

selon lequel chacune des deux pales de référence a un rayon de pale depuis le pied de pale jusqu'à un bout de pale de celles-ci, et le rayon de pale des deux pales de référence est plus grand qu'une longueur depuis le pied de pale jusqu'à une position d'inclinaison de la pale d'éolienne (1),

selon lequel la position d'inclinaison de la pale d'éolienne (1) est une position de début où l'ailette (3) commence à être inclinée par rapport à la partie adjacente (9),

selon lequel une première pale de référence (ligne de base) des deux pales de référence a une envergure de pale de 1,0R et pas d'ailette, et l'autre pale de référence (ligne de base 0,99R) des deux pales de référence a une envergure de pale de 0,99R et pas d'ailette,

selon lequel R est l'envergure de pale de la première pale de référence (ligne de base),

prévoyant une pluralité de pales ayant différents angles d'inclinaison et calculant des couples et des moments de pied de pale des pales par des simulations,

reportant la valeur du résultat calculé de la pale de référence (ligne de base 0,99R) comme origine (1,0, 1,0) en bas à gauche d'un graphique illustrant une relation entre le couple et la charge, reportant la valeur du résultat calculé de la pale de référence (ligne de base), et obtenant une ligne droite (extension) passant par l'origine et la valeur du résultat calculé de la pale de référence (ligne de base), selon lequel le graphique a un axe vertical indiquant le couple et un axe horizontal indiquant le moment de pied de pale,

reportant des valeurs des résultats calculés de la pluralité de pales ayant des angles d'inclinaison différents sur le graphique,

déterminant une plage des angles d'inclinaison dans laquelle le couple est plus grand et le moment de pied de pale est plus petit, à partir des valeurs des résultats calculés de la pluralité de pales tombant au-dessus de la ligne droite (extension), en comparant la ligne droite (extension) avec les valeurs des résultats calculés de la pluralité de pales,

selon lequel l'angle d'inclinaison est défini par une ligne axiale de pale (13) de l'ailette (3) par rapport à une ligne d'extrapolation radiale (11a) d'une ligne axiale de pale (11) de la partie adjacente (9),

selon lequel l'angle d'inclinaison est compris entre 15° ou plus et 55° ou moins,

selon lequel chacune des deux pales de référence a un rayon de pale depuis le pied de pale jusqu'à un bout de pale de celles-ci, et le rayon de pale de chacune des deux pales de référence est plus grand qu'une longueur depuis le pied de pale jusqu'à une position d'inclinaison de la pale d'éolienne (1),

selon lequel la position d'inclinaison est prévue pour être à 97,0% de R ou plus et 98,5% de R ou moins.

2. Procédé de conception selon la revendication 1, selon lequel
l'ailette (3) comporte :

une extrémité de bout (3a) située sur un côté de bout de celle-ci, ayant une ligne axiale de pale sensiblement linéaire (13) ; et
une partie inclinée (3b) qui se trouve sur un côté d'extrémité de base de celle-ci et inclinée par rapport à la partie adjacente (9),
et
la partie inclinée (3b) est inclinée progressivement de façon à satisfaire l'angle d'inclinaison.

3. Procédé de conception selon l'une quelconque des revendications 1 à 2, selon lequel
l'ailette (3) est inclinée vers un côté de pression (7) de la pale quand la pale d'éolienne (1) est configurée pour se trouver sur un côté au vent d'une tour d'éolienne.

4. Procédé de conception selon l'une quelconque des revendications 1 à 2, selon lequel
l'ailette (3) est inclinée vers un côté de dépression (5) de la pale quand la pale d'éolienne est configurée pour se trouver sur un côté sous le vent d'une tour d'éolienne.

FIG. 1

# FIG. 2

# FIG. 3

EP 2 682 597 B1

# FIG. 4

EP 2 682 597 B1

FIG. 5

EP 2 682 597 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7540716 B
- US 20090257885 A1